# EUROPÄISCHE PATENTSCHRIFT

(11) **EP 2 011 626 B1**
(45) Veröffentlichungstag und Bekanntmachung des Hinweises auf die Patenterteilung: **21.07.2010**
(21) Anmeldenummer: 08008825.5
(22) Anmeldetag: 13.05.2008
(51) Int. Cl.: B29C 47/56, B29C 47/14

(54) **Spritzkopf für einen Extruder**
Extruder head
Tête d'extrusion

(30) Priorität: 02.07.2007 DE 102007030679
(43) Veröffentlichungstag der Anmeldung: 07.01.2009
(73) Patentinhaber: Troester GmbH & Co.KG, D-30519 Hannover (DE)
(72) Erfinder: Unland, Eckhard, 30982 Pattensen (DE); Hoffmann, Wieland, 30539 Hannover (DE)
(74) Vertreter: Scheffler, Jörg

(56) Entgegenhaltungen:
- DE-A1- 3 729 447
- DE-A1- 19 517 247
- US-A- 3 488 807
- US-A- 4 008 036
- US-A- 4 372 736

## Beschreibung

Die Erfindung betrifft einen insbesondere für eine oder mehrere Komponenten bestimmten Spritzkopf für einen oder mehrere Extruder, welcher zwei relativ zueinander mittels eines jeweiligen Gelenks schwenkbewegliche Kopfteile aufweist, die in einer Arbeitsposition an einer Dichtungsfläche anliegen und mittels eines Antriebes, insbesondere eines Hydraulikzylinders, vorspannbar sind und mittels des Antriebes in eine geöffnete, einen freien Zugang ermöglichende Ruheposition schwenkbar sind.

Solche Spritzköpfe werden in der Praxis in Verbindung mit einem oder mehreren Extrudern bereits vielfach eingesetzt. Zu Reinigungs- oder Umrüstungszwecken sind die Kopfteile in eine Ruheposition beweglich.

Spritzköpfe für die Verarbeitung von Kautschukmischungen erfordern neben der geschlossenen Arbeitsposition auch eine geöffnete Ruheposition, in welcher Fließkanäle des Spritzkopfes ausgewechselt oder gereinigt werden können. In der Arbeitsposition müssen die Kopfteile dem Druck der Kautschukmischung standhalten. Die erforderliche Antriebsleistung für die Schwenkbewegung in die Ruheposition einerseits und für die Festlegung der Kopfteile in der geschlossenen Arbeitsposition andererseits wird dabei mittels mehrer Antriebe, insbesondere Hydraulikzylindern, aufgebracht.

In der Praxis sind bereits als Klammerkopf bezeichnete Spritzköpfe bekannt, bei denen zwei einander gegenüberliegend angeordnete seitliche Klammem jeweils beide Kopfteile in der Arbeitsposition festlegen. Derartige Klammern vermögen erheblich größere Kräfte aufzufangen als die zu ihrer Bewegung dienenden Hydraulikkolben-Zylinder-Einheiten. Die Klammem haben hierzu jeweils eine eine Klemmebene bildende Kontaktfläche, sodass eine Verschiebung in Richtung der den Extrudern zugewandten Seite des Spritzkopfes zu einer Erhöhung der Klemmkräfte führt, wie dies durch die DE 22 01 631 C3 und die DE-OS 22 36 363 offenbart wird, wo die Zusammenhaltekräfte von Klammern aufgenommen werden, die von Kolben-Zylinder-Einheiten verschoben und in ihrer Schließstellung gesichert werden.

Aus dieser DE-OS 22 36 363 ist es bekannt geworden, bei einem Breitspritzkopf den beweglichen Teil und den verschwenkbaren Teil miteinander durch verschwenkbare Klammem zu verbinden, welche durch Hydraulikkolben-Zylinder-Einheiten in ihren Klammersitz gepresst werden.

Als nachteilig erweist sich dabei, dass zur Einstellung der Ruheposition zunächst mittels des Antriebes die Klammer gelöst und diese anschließend mittels eines weiteren Antriebes aus dem Öffnungsbereich der Kopfteile heraus geschwenkt werden muss.

Weiterhin sind auch bereits als Hammerkopf bezeichnete Spritzköpfe bekannt, bei denen jedem der Kopfteile jeweils zwei außenseitige, im Wesentlichen parallele Zugelemente zugeordnet sind, die mit einem Zugelementekopf in der Arbeitsposition in eine entsprechende Vertiefung des jeweiligen Kopfteiles eingreifen, sodass die erforderliche Presskraft durch die Zugelemente aufgebracht werden kann.

Die DE 42 36 120 C1 beschreibt bereits einen solchen Spritzkopf für eine Extrusionsanlage der Kautschuk oder Kunststoff verarbeitenden industrie, bestehend aus einem an der Extrusionsanlage anzuflanschenden feststehenden Kopfteil und mindestens einem an der Spritzleiste anliegenden, für Reinigungszwecke verschwenkbaren Kopfteil, der mittels eines Gelenkes am feststehenden Kopfteil angelenkt ist. Die Kopfteile sind dabei in der Arbeitsposition mittels eines Paares von durch je eine Kolben-Zylinder-Einheit betätigten Zugankern am feststehenden Teil festgeklammert und mittels einer weiteren Kolben-Zylinder-Einheit in die Ruheposition verschwenkbar.

Weiterhin sind durch die DE 34 30 062 C2 und in anderer Ausführungsform durch die DE 37 36 231 A1 jeweils ein Spritzkopf bekannt, bei dem die beweglichen Teile des Spritzkopfes die erforderlichen hohen Schließkräfte allein durch Kolben-Zylinder-Einheiten aufbringen. Das macht die Verwendung sehr leistungsstarker Kolben-Zylinder-Einheiten erforderlich.

Im Falle der DE 34 30 062 C2 ist die Kolben-Zylinder-Einheit an ihrem einen Ende nach außen verschwenkbar am feststehenden Teil des Spritzkopfes angelenkt. Beim Öffnungsvorgang wird die Kolben-Zylinder-Einheit unter dem Einfluss dieser Kulisse nach außen gedrückt, sodass die Zuganker aus der Bewegungsbahn der verschwenkbaren Spritzkopfteile für deren Öffnungsvorgang herausgeschwenkt werden.

Daneben ist aus der DE-OS 24 57 532 ein Einfach-Extrusionskopf mit zwei beweglichen Kopfhälften bekannt, deren gemeinsame Trennfuge durch die Achse des Extruders geht und die gegen die Stirnseite des Extruders jeweils eine weitere Trennfuge oder Druckflächenpaarung bilden. Bei diesem bekannten Extruder ist mittig oben und unten am Zylinder des Schneckenextruders je ein Hydraulikzylinder angelenkt, der mit seiner Kolbenstange jeweils an einem Doppelhebel zum Freigeben und Verspannen der Kassette und der Profilleiste und zum Öffnen, Schließen und Verspannen der Kopfteile dient. Abgesehen davon, dass dieses Schließsystem auf einen Extrusionskopf mit zwei beweglichen Kopfteilen beschränkt ist, müssen zum Öffnen und Schließen der Kopfteile auch dieses Extrusionskopfes Klammem seitlich verschwenkt werden.

In jedem Fall müssen die Zugrahmen seitlich ausgeschwenkt werden, wenn die beweglichen Kopfteile zum Öffnen der Zuführkanäle angehoben bzw. abgesenkt werden sollen. Das seitliche Ausschwenken der ohnehin sehr breiten Zugrahmen erfordert aber einen erheblichen Platzbedarf. Außerdem müssen die hierzu ebenfalls schwenkbaren Hydraulikzylinder über flexible Leitungen mit einer Druckquelle verbunden werden.

Es ist weiterhin eine Bauform bekannt, bei welcher die Kopfteile in üblicher Weise um beiderseits einer Längsachse angeordnete Gelenke mittels eines einzigen, dem jeweiligen Kopfteil zugeordneten Antriebs schwenkbeweglich sind. Die als Hydraulikzylinder ausgeführten Antriebe dienen dabei sowohl der Übertragung der Haltekraft und der Dichtungskräfte in der Arbeitsposition als auch dem Verschwenken in die Ruheposition und sind hierzu im Wesentlichen quer zu der Längsachse angeordnet. Als nachteilig erweisen sich dabei die dadurch wesentlich größeren Abmessungen.

Die DE 39 23 290 C1 betrifft einen Strangpresskopf zur Herstellung von Profilen aus verschiedenartigen Kautschuk- und/oder Kunststoffmischungen, die aus mehreren Extrudern ausgepresst werden, mit mindestens einem beweglichen Kopfteil. Ein Antrieb dient dabei der Erzeugung der die Hauptteile zusammenpressenden Schließkraft sowie einer keilförmigen, Klammern aufweisenden Verriegelungsvorrichtung.

Die DE 37 29 447 A1 betrifft einen mit einem Extruder verbundenen Extrusionskopf mit einem feststehenden Kopfteil und einer bewegbaren Kopfteilanordnung zur Herstellung von Profilstreifen aus plastischen Stoffen, insbesondere Kautschukmischungen. Der Extrusionskopf weist ein feststehendes Kopfteil auf, das mit drei übereinander angeordneten Extradem verbunden ist. An seinem einen seitlichen Ende weist das Kopfteil Halterungen für eine Schwenkachse auf, um die ein vorderes Kopfteil schwenkbar gelagert ist. Jeweils an der Ober- und Unterseite des Extrusionskopfes ist an dem feststehenden Kopfteil ein Hydraulikzylinder angelenkt, dessen Kolbenstange an das bewegliche Kopfteil angelenkt ist.

Zum Öffnen des Extrusionskopfes werden zunächst die Hydraulikzylinder zurückgefahren, sodass die Kolbenstangen bzw. Keilleisten aus den entsprechenden Ausnehmungen des schwenkbaren Kopfteils gelangen. Anschließend werden die hydraulischen Schwenkzylinder betätigt, bis der Öffnungswinkel des schwenkbaren Kopfteils gegenüber dem feststehenden Kopfteil 2 etwa 90° beträgt.

In ähnlicher Weise sind auch bei einem Spritzkopf eines Extruders gemäß der US 4 372 736 die zueinander um ein jeweiliges Gelenk schwenkbeweglichen Kopfteile durch einen Hydraulikzylinder verbunden, der am äußeren Ende des jeweiligen Kopfteils gelenkig angeordnet ist.

Der Erfindung liegt die Aufgabe zugrunde, einen Spritzkopf zu schaffen, dessen Kopfteile einfach und mit wenigen Bauteilen in der Arbeitsposition festlegbar und in die Ruheposition schwenkbar sind. Weiterhin soll eine kompakte Bauform des Spritzkopfes realisiert werden.

Diese Aufgabe wird erfindungsgemäß mit einem Spritzkopf gemäß den Merkmalen des Anspruchs 1 gelöst. Die weitere Ausgestaltung der Erfindung ist den Unteransprüchen zu entnehmen,

Erfindungsgemäß ist also ein für eine oder mehrere Komponenten, insbesondere Kautschukkomponenten, bestimmter Spritzkopf vorgesehen, bei dem der Antrieb mittels eines Verbindungselementes, das zwei relativ zueinander bewegliche Zugstangen hat, mit beiden Kopfteilen verbunden ist, wobei mittels des Antriebes die Kopfteile sowohl in der Arbeitsposition festlegbar als auch in die Ruheposition schwenkbar sind. Hierbei wird mittels des Antriebes die zur Abdichtung in der Arbeitsposition erforderliche Schließ- bzw. Haltekraft zugleich auf beide zueinander beweglichen Kopfteile übertragen, sodass der so gestaltete Spritzkopf mit im Vergleich zum Stand der Technik wenig oder sogar mit einem einzigen Antrieb realisierbar ist. Hierdurch ist der konstruktive Aufwand ebenso wie der Steuerungsaufwand geringer und der erforderliche Bauraum erheblich vermindert. Zudem dient der Antrieb nicht lediglich der Einhaltung der Arbeitsposition, sondern gestattet zugleich das Verschwenken der Kopfteile in die Ruheposition, sodass also kein zusätzlicher Antrieb erforderlich ist. Zugleich wird dabei durch das Verbindungselement in der Arbeitsposition ein Ausgleich der mittels des Antriebes auf die Kopfteile übertragbaren Haltekraft realisiert, sodass eine gleichmäßige und somit zuverlässige Abdichtung durch nahezu übereinstimmende Schließkräfte erreicht wird. Jedes Verbindungselement hat zwei relativ zueinander bewegliche Zugstangen, die zwischen sich einen durch die jeweilige Position bestimmten Winkel einschließen. Auf diese Weise wird eine mit vergleichsweise geringem Aufwand realisierbare Verbindung der beiden Kopfteile mit den Zugstangen, die zur Einstellung der Ruheposition auch Druckkräfte übertragen können, geschaffen. Die Zugstangen gestatten zudem eine individuelle Längenanpassung zum Ausgleich von Toleranzeinflüssen.

Dabei erweist sich eine Ausführungsform der Erfindung als besonders praxisgerecht, bei der zumindest zwei auf ein jeweiliges Verbindungselement wirkende Antriebe beiderseits des Spritzkopfes angeordnet sind. Hierdurch wird die Zugänglichkeit des Spritzkopfes insbesondere in der Ruheposition sichergestellt. Zugleich wird die gewünschte kompakte Bauform erreicht und eine gleichmäßige Krafteinleitung mittels der symmetrisch zur Mittelachse, insbesondere in einer gemeinsamen Ebene angeordneten Antriebe sichergestellt.

Grundsätzlich könnte das Verbindungselement mittels eines Schwenkhebels mit dem Antrieb verbunden sein, um die Wirkrichtung der Antriebsleistung umzulenken. Besonders einfach ist es hingegen, wenn die Antriebe in einer mit einer Mittellängsachse des Spritzkopfes gemeinsamen Ebene angeordnet sind, um so die Baugröße weiter zu vermindern und dabei auch unerwünschte abweichende Krafteinleitungen zu vermeiden.

Die Anlenkung der Zugstangen an dem jeweiligen Kopfteil erfolgt vorzugsweise in einem maximalen Abstand zu dem der Schwenkbarkeit des Kopfteils dienenden Gelenk. Besonders Erfolg versprechend ist es darüber hinaus, wenn die Anlenkungspunkte der Zugstangen an dem jeweiligen Kopfteil derart bestimmt sind, dass die Wirklinien der mittels der Zugstangen übertragbaren Haltekraft in der Arbeitsposition im Wesentlichen parallel zu den im Betrieb auftretenden Massedruckkräften sind. Hierdurch ist die Wirkrichtung der mittels der Zugstangen übertragbaren Haltekraft im Wesentlichen entgegengesetzt zu der Wirkrichtung der Massedruckkräfte, sodass eine verbesserte Abdichtung ohne eine Erhöhung der Antriebsleistung erreicht werden kann. Die Anlenkungspunkte der Zugstangen an dem jeweiligen Kopfteil sind dabei insbesondere auf einer dem Antrieb abgewandten Seite der durch die Gelenke der Kopfteile bestimmten Ebene angeordnet.

Insbesondere wird diese optimale Krafteinleitung dadurch sichergestellt, dass die Anlenkungspunkte der Zugstangen an dem jeweiligen Kopfteil derart bestimmt sind, dass die jeweilige Orientierung der Zugstangen in der Arbeitsposition im Wesentlichen senkrecht zu einer dem jeweiligen Kopfteil zugeordneten Dichtungsfläche ist.

Weiterhin erweist es sich als besonders Erfolg versprechend, wenn die einem gemeinsamen Antrieb zugeordneten Zugstangen in der Arbeitsposition einen Winkel kleiner als 90°, insbesondere einen Winkel zwischen 40° und 80°, einschließen. Hierdurch wird eine optimale Übertragung der mittels des Antriebs einleitbaren Zugkraft sichergestellt, wobei insbesondere also eine unerwünschte gegenseitige Beeinflussung der den beiden Kopfteilen jeweils zugeordneten Zugstangen vermieden wird.

Eine weitere, besonders vorteilhafte Ausführungsform der vorliegenden Erfindung wird auch dadurch erreicht, dass die einem gemeinsamen Antrieb zugeordneten Zugstangen jeweils mittels eines als Radiallager ausgeführten Lagers mit dem Antrieb verbunden sind und die beiden Lager koaxial angeordnet sind. Hierzu ist beispielsweise die Kolbenstange des den Antrieb bildenden Hydraulikzylinders mit einer Querachse verbunden, welche jeweils ein Lager für zwei Zugstangen bildet. Durch die so in einfacher Weise realisierbare koaxiale Lagerung kann zudem mit geringem Aufwand eine Krafteinleitung in die jeweilige Zugstange sichergestellt werden, deren Beträge zumindest annähernd übereinstimmen.

Weiterhin ist es besonders praxisnah, wenn die Lager, welche die Zugstangen mit dem Antrieb verbinden, und die Gelenke der beiden Kopfteile in einer gemeinsamen Ebene angeordnet sind, um so die Krafteinleitung und damit die Haltekräfte in der geschlossenen Arbeitsposition der Kopfteile zu optimieren.

Eine andere, ebenfalls besonders zweckmäßige Ausgestaltung der vorliegenden Erfindung wird dann erreicht, wenn der Antrieb zum Ausgleich von Lagetoleranzen in der Arbeitsposition eingeschränkt beweglich angeordnet ist. Hierdurch werden zugleich in der Praxis unvermeidliche Toleranzeinflüsse ausgeglichen und eine ungleichmäßige Krafteinleitung aufgrund der quer zu der Antriebsbewegung möglichen Ausgleichsbeweglichkeit vermieden. Beispielsweise kann hierzu ein den Antrieb bildender Hydraulikzylinder quer zur Zylinderachse in einer Schiebeführung in Richtung zumindest einer Raumachse beweglich ausgeführt sein.

Eine andere, ebenfalls besonders zweckmäßige Weiterbildung der vorliegenden Erfindung wird dann erreicht, wenn der Antrieb mittels einer insbesondere kardanischen Lagerung um zwei Raumachsen eingeschränkt schwenkbeweglich ist, sodass der Antrieb um zwei, gegenüber den den Zugstangen zugeordneten Radiallagern lediglich einen geringen Abstand aufweisenden Achsen schwenkbeweglich angeordnet ist.

In ähnlicher Weise wird der gewünschte Ausgleich auch durch eine andere Abwandlung der vorliegenden Erfindung ermöglicht, bei welcher der Antrieb zum Ausgleich von Lagetoleranzen gegen ein zumindest abschnittsweise sphärisches Widerlager abgestützt ist, wobei der Hydraulikzylinder an seiner den Kopfteilen zugewandten Stirnfläche eine konvexe Ausformung aufweist, welche gegen das konkave, sphärische Widerlager anliegt und dadurch nach Art eines Kugelkopfes eine eingeschränkte Beweglichkeit aufweist.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig. 1: eine perspektivische Darstellung eines erfindungsgemäßen Spritzkopfes;
- Fig. 2: eine Seitenansicht des in Figur 1 gezeigten Spritzkopfes in einer Arbeitsposition;
- Fig. 3: eine Seitenansicht des in Figur 1 gezeigten Spritzkopfes in einer Ruheposition.

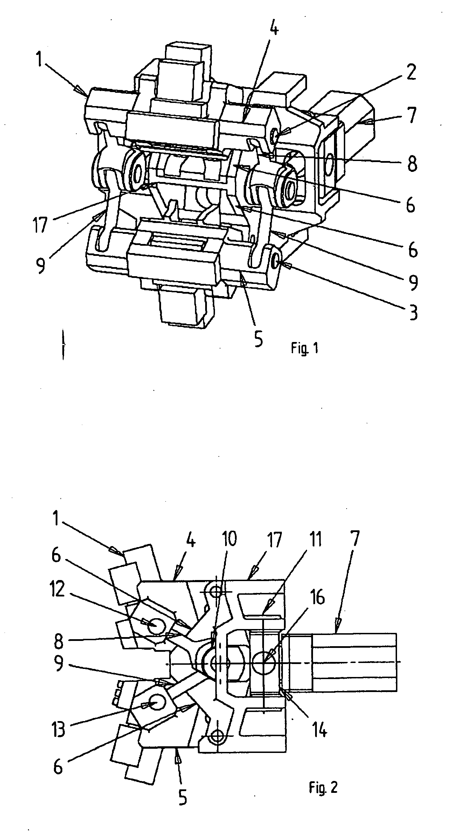

Figur 1 zeigt eine perspektivische Darstellung eines erfindungsgemäßen Spritzkopfes 1 für Kautschukmischungen in einer geöffneten Ruheposition. Der Spritzkopf 1 weist zwei relativ zueinander um ein jeweiliges Gelenk 2, 3 schwenkbewegliche Kopfteile 4, 5 auf, welche in einer Arbeitsposition entlang einer Dichtungsfläche 6 gegen einen Mittelteil 17 anliegen. Die Kopfteile 4, 5 sind durch zwei Antriebe 7 in die dargestellte, einen freien Zugang ermöglichende Ruheposition schwenkbar angeordnet. Die beiden Antriebe 7 sind beiderseits der Kopfteile 4, 5 angeordnet und über zwei Zugstangen 8, 9 jeweils sowohl mit dem als Kopfoberteil als auch mit dem als Kopfunterteil ausgeführten Kopfteil 4, 5 verbunden.

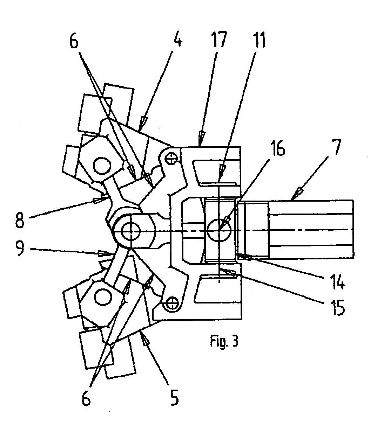

Die Übertragung der Antriebsleistung auf die Kopfteile 4, 5 wird anhand der Figuren 2 und 3 in einer Seitenansicht näher dargestellt, welche den in der Figur 1 gezeigten Spritzkopf 1 einerseits in einer Arbeitsposition und andererseits in einer Ruheposition darstellen. Wie zu erkennen ist der Antrieb 7 mittels eines durch die beiden relativ zueinander beweglichen Zugstangen 8, 9 gebildeten Verbindungselementes 10 mit den beiden Kopfteilen 4, 5 verbunden, sodass mittels des Antriebes 7 die Kopfteile 4, 5 sowohl in der Arbeitsposition festlegbar als auch in die Ruheposition schwenkbar sind. Hierzu sind die Zugstangen 8, 9 jeweils mittels eines als Radiallager ausgeführten Lagers 11 mit dem Antrieb 7 verbunden, wobei die beiden Lager 11 koaxial angeordnet sind. Die Anlenkungspunkte 12, 13 der Zugstangen 8, 9 an dem jeweiligen Kopfteil 4, 5 sind dabei derart bestimmt, dass die jeweilige Orientierung der Zugstangen 8, 9 in der Arbeitsposition im Wesentlichen senkrecht zu der dem jeweiligen Kopfteil zugeordneten Dichtungsfläche 6 an dem Mittelteil 17 ist. Zum Ausgleich von Lagetoleranzen ist der Antrieb 7 mittels einer kardanischen Lagerung 14 um zwei Raumachsen 15, 16 eingeschränkt schwenkbeweglich angeordnet, sodass Toleranzeinflüsse ausgeglichen werden und eine ungleichmäßige Krafteinleitung in die Zugstangen 8, 9 vermieden wird.

## Patentansprüche

1. Spritzkopf (1) für einen oder mehrere Extruder, welcher zwei relativ zueinander mittels eines jeweiligen Gelenks (2, 3) schwenkbewegliche Kopfteile (4, 5) aufweist, die in einer Arbeitsposition an einer Dichtungsfläche (6) anliegen und mittels eines Antriebes (7), insbesondere eines Hydraulikzylinders, vorspannbar sind und mittels des Antriebes (7) in eine geöffnete, einen freien Zugang ermöglichende Ruheposition schwenkbar sind, **dadurch gekennzeichnet, dass** der Antrieb (7) mittels eines Verbindungselementes (10), das zwei relativ zueinander bewegliche Zugstangen (8, 9) hat, mit beiden Kopfteilen (4, 5) verbunden ist, wobei mittels des Antriebes (7) die Kopfteile (4, 5) sowohl in der Arbeitsposition festlegbar als auch in die Ruheposition schwenkbar sind.

2. Spritzkopf (1) nach Anspruch 1, **dadurch gekennzeichnet, dass** zumindest zwei auf ein jeweiliges Verbindungselement (10) wirkende Antriebe (7) beiderseits des Spritzkopfes (1) angeordnet sind.

3. Spritzkopf (1) nach den Ansprüchen 1 oder 2, **dadurch gekennzeichnet**, das die Antriebe (7) in einer mit einer Mittellängsachse des Spritzkopfes (1) gemeinsamen Ebene angeordnet sind.

4. Spritzkopf (1) nach zumindest einem der vorhergehenden Ansprüche, **dadurch gekennzeichnet, dass** jedes Kopfteil (4, 5) Anlenkungspunkte (12, 13) für die Zugstangen (8, 9) aufweist, sodass die Wirklinien der mittels der Zugstangen (8, 9) übertragbaren Haltekraft in der Arbeitsposition im Wesentlichen parallel zu den im Betrieb auftretenden Massedruckkräften sind.

5. Spritzkopf (1) nach zumindest einem der vorhergehenden Ansprüche, **dadurch gekennzeichnet, dass** die Anlenkungspunkte (12, 13) der Zugstangen (8, 9) an dem jeweiligen Kopfteil (4, 5) derart bestimmt sind, dass die jeweilige Orientierung der Zugstangen (8, 9) in der Arbeitsposition im Wesentlichen senkrecht zu einer dem jeweiligen Kopfteil (4, 5) zugeordneten Dichtungsfläche (6) ist.

6. Spritzkopf (1) nach zumindest einem der vorhergehenden Ansprüche, **dadurch gekennzeichnet, dass** die einem gemeinsamen Antrieb (7) zugeordneten Zugstangen (8, 9) in der Arbeitsposition einen Winkel kleiner als 90°, insbesondere einen Winkel zwischen 40° und 80°, einschließen.

7. Spritzkopf (1) nach zumindest einem der vorhergehenden Ansprüche, **dadurch gekennzeichnet, dass** die einem gemeinsamen Antrieb (7) zugeordneten Zugstangen (8, 9) jeweils mittels eines als Radiallager ausgeführten Lagers (11) mit dem Antrieb (7) verbunden sind und die beiden Lager (11) koaxial angeordnet sind.

8. Spritzkopf (1) nach Anspruch 7, **dadurch gekennzeichnet, dass** die Lager (11) und die Gelenke (2, 3) der beiden Kopfteile (4, 5) in einer gemeinsamen Ebene angeordnet sind.

9. Spritzkopf (1) nach zumindest einem der vorhergehenden Ansprüche, **dadurch gekennzeichnet, dass** der Antrieb (7) zum Ausgleich von Lagetoleranzen eingeschränkt beweglich angeordnet ist.

10. Spritzkopf (1) nach Anspruch 9, **dadurch gekennzeichnet, dass** der Antrieb (7) mittels einer insbesondere kardanischen Lagerung (14) um zwei Raumachsen (15, 16) eingeschränkt schwenkbeweglich ist.

11. Spritzkopf (1) nach zumindest einem der vorhergehenden Ansprüche, **dadurch gekennzeichnet, dass** der Antrieb (7) zum Ausgleich von Lagetoleranzen gegen ein zumindest abschnittsweise sphärisches Widerlager abgestützt ist.

## Claims

1. Die head (1) for one or more extruders, which has two head parts (4, 5), which are pivotably movable in relation to each other by means of a respective joint (2, 3), in a working position lie against a sealing surface (6) and can be prestressed by means of a drive (7), in particular a hydraulic cylinder, and can be pivoted by means of the drive (7) into an open rest position, permitting free access, **characterized in that** the drive (7) is connected to both head parts (4, 5) by means of a connecting element (10), which has two tie rods (8, 9) that are movable in relation to each other, it being possible by means of the drive (7) for the head parts (4, 5) both to be fixed in the working position and to be pivoted into the rest position.

2. Die head (1) according to Claim 1, **characterized in that** at least two drives (7) acting on a respective connecting element (10) are arranged on either side of the die head (1).

3. Die head (1) according to Claim 1 or 2, **characterized in that** the drives (7) are arranged in a plane shared by a centre longitudinal axis of the die head (1).

4. Die head (1) according to at least one of the preceding claims, **characterized in that** each head part (4, 5) has points of articulation (12, 13) for the tie rods (8, 9), so that, in the working position, the lines of effect of the holding force that can be transferred by means of the tie rods (8, 9) are substantially parallel to the forces of the melt pressure occurring during operation.

5. Die head (1) according to at least one of the preceding claims, **characterized in that** the points of articulation (12, 13) of the tie rods (8, 9) on the respective head part (4, 5) are determined in such a way that the respective orientation of the tie rods (8, 9) in the working position is substantially perpendicular to the sealing surface (6) that is assigned to the respective head part (4, 5).

6. Die head (1) according to at least one of the preceding claims, **characterized in that**, in the working position, the tie rods (8, 9) assigned to a shared drive (7) form an angle of less than 90°, in particular an angle between 40° and 80°.

7. Die head (1) according to at least one of the preceding claims, **characterized in that** the tie rods (8, 9) assigned to a shared drive (7) are respectively connected to the drive (7) by means of a bearing (11) configured as a radial bearing, and the two bearings (11) are arranged coaxially.

8. Die head (1) according to Claim 7, **characterized in that** the bearings (11) and the joints (2, 3) of the two head parts (4, 5) are arranged in a shared plane.

9. Die head (1) according to at least one of the preceding claims, **characterized in that** the drive (7) is arranged in a restrictedly movable manner to compensate for positional tolerances.

10. Die head (1) according to Claim 9, **characterized in that** the drive (7) is movable in a restrictedly pivoting manner about two spatial axes (15, 16) by means of a mounting (14), in particular a cardanic mounting.

11. Die head (1) according to at least one of the preceding claims, **characterized in that** the drive (7) is supported against an at least partly spherical abutment to compensate for positional tolerances.

## Revendications

1. Tête d'extrusion (1) pour une ou plusieurs extrudeuses, qui comporte deux parties de tête (4, 5) aptes à pivoter l'une par rapport à l'autre au moyen d'une articulation respective (2, 3), qui, dans une position de travail, sont appliquées sur une face d'étanchéité (6), qui peuvent être précontraintes au moyen d'un entraînement (7), en particulier d'un vérin hydraulique et qui peuvent pivoter, au moyen de l'entraînement (7), dans une position de repos ouverte permettant un accès libre, **caractérisée en ce que** l'entraînement (7) est relié aux deux parties de tête (4, 5) au moyen d'un élément de liaison (10) qui comporte deux bielles (8, 9) mobiles l'une par rapport à l'autre, dans laquelle les parties de tête (4, 5) peuvent aussi bien être fixées dans la position de travail que pivoter dans la position de repos au moyen de l'entraînement (7).

2. Tête d'extrusion (1) selon la revendication 1, **caractérisée en ce qu'**au moins deux entraînements (7) agissant chacun sur un élément de liaison (10) sont disposés de part et d'autre de la tête d'extrusion (1).

3. Tête d'extrusion (1) selon les revendications 1 ou 2, **caractérisée en ce que** les entraînements (7) sont disposés dans un plan commun avec l'axe longitudinal central de la tête d'extrusion (1).

4. Tête d'extrusion (1) selon au moins une des revendications précédentes, **caractérisée en ce que** chaque partie de tête (4, 5) présente des points d'articulation (12, 13) pour les bielles (8, 9), de telle manière que les lignes d'action de la force de maintien transmissible au moyen des bielles (8, 9) dans la position de travail soient essentiellement parallèles aux forces de pression massiques se produisant en fonctionnement.

5. Tête d'extrusion (1) selon au moins une des revendications précédentes, **caractérisée en ce que** les points d'articulation (12, 13) des bielles (8, 9) sont déterminés sur la partie de tête respective (4, 5), de telle manière que l'orientation respective des bielles (8, 9) dans la position de travail soit sensiblement perpendiculaire à une face d'étanchéité (6) tournée vers la partie de tête respective (4, 5).

6. Tête d'extrusion (1) selon au moins une des revendications précédentes, **caractérisée en ce que** les bielles (8, 9) associées à un entraînement commun (7) forment, dans la position de travail, un angle inférieur à 90°, en particulier un angle compris entre 40° et 80°.

7. Tête d'extrusion (1) selon au moins une des revendications précédentes, **caractérisée en ce que** les bielles (8, 9) associées à un entraînement commun (7) sont reliées respectivement à l'entraînement (7) au moyen d'un palier (11) constitué par un palier radial et les deux paliers (11) sont disposés coaxialement.

8. Tête d'extrusion (1) selon la revendication 7, **caractérisée en ce que** les paliers (11) et les articulations (2, 3) des deux parties de tête (4, 5) sont disposés dans un plan commun.

9. Tête d'extrusion (1) selon au moins une des revendications précédentes, **caractérisée en ce que** l'entraînement (7) présente une mobilité réduite pour compenser des tolérances de position.

10. Tête d'extrusion (1) selon la revendication 9, **caractérisée en ce que** l'entraînement (7) présente une mobilité de pivotement réduite autour de deux axes spatiaux (15, 16) au moyen d'un support (14), en particulier un support par joint à cardan.

11. Tête d'extrusion (1) selon au moins une des revendications précédentes, **caractérisée en ce que** l'entraînement (7) est supporté sur un appui au moins partiellement sphérique pour compenser des tolérances de position.
